# EUROPEAN PATENT APPLICATION

(11) **EP 4 632 606 A1**
(43) Date of publication of application: **15.10.2025**
(21) Application number: 23917213.3
(22) Date of filing: 28.11.2023
(51) Int. Cl.: G06F 21/51

(54) **THIRD-PARTY SOFTWARE DEVELOPMENT KIT ACCESS CONTROL METHOD, COMPUTER DEVICE AND MEDIUM**

(30) Priority: 18.01.2023 CN 202310097217
(71) Applicant: ZTE CORPORATION, Shenzhen, Guangdong 518057 (CN)
(72) Inventor: YIN, Qian, Shenzhen, Guangdong 518057 (CN)
(74) Representative: Canzler & Bergmeier Patentanwälte Partnerschaft mbB
(86) International application number: PCT/CN2023/134721
(87) International publication number: WO 2024/152745

(57) **Abstract**

The present disclosure provides a third-party software development kit (SDK) access control method, which comprises: receiving an installation request of a target application, and acquiring an installation package of the target application carried in the installation request; and under the condition that it is determined that the installation package of the target application carries a third-party SDK, distributing different sandboxes for the third-party SDK and the target application; and in the process of running the target application, performing resource access control on the target application and the third-party SDK. The present disclosure further provides a computer device and a readable medium.

## Description

### TECHNICAL FIELD

The present disclosure relates to the technical field of information communication, and in particular, to a third-party software development kit access control method, a computer device, and a medium.

### BACKGROUND

In recent years, mobile smart devices penetrate into all aspects of people's work and lives, and mobile applications have played an indispensable role.

With the continuous growth of ecosystem of Android^{™} mobile operating systems, third-party application service companies in fields of advertising, payment, statistics, push, maps, and social networking develop their respective Software Development Kits (SDKs) for making it easy for mobile application developers to use the services provided by the companies, with certain functions, requests, and response-oriented Application Programming Interfaces (APIs) packaged in the SDKs. Due to widespread use of the third-party SDKs and invisibility of the third-party SDKs to the developers, once a security issue occurs, the impact of the security issue is uncontrollable.

Since the third-party SDKs are packaged before delivered to the mobile application developers, and internal logic and implementation of the third-party SDKs are invisible to the developers, which may possibly raise a problem as follows: some malicious SDKs may not only provide necessary functions but also have hidden security threats, such as acquiring user privacy, actively receiving remote instructions, and performing dangerous actions such as uploading information of a host application or a host mobile operating system and performing dynamic downloading.

### SUMMARY

The present disclosure provides a third-party SDK access control method, a computer device, and a medium.

An embodiment of the present disclosure provides a third-party SDK access control method, including: receiving an installation request for a target application, and obtaining an installation package of the target application carried in the installation request; in response to determining that the installation package of the target application carries a third-party SDK, allocating different sandboxes to the third-party SDK and the target application; and performing resource access control on the target application and the third-party SDK in a process of running the target application.

An embodiment of the present disclosure further provides a computer device, including: one or more processors, and a memory having one or more programs stored thereon; and the one or more programs, when executed by the one or more processors, cause the one or more processors to implement the above third-party SDK access control method.

An embodiment of the present disclosure further provides a computer readable medium having a computer program stored thereon, wherein the above third-party SDK access control method is implemented when the program is executed.

### BRIEF DESCRIPTION OF DRAWINGS

FIG. 1 is a flowchart illustrating a third-party SDK access control method according to an embodiment of the present disclosure;
FIG. 2 is another flowchart illustrating a third-party SDK access control method according to an embodiment of the present disclosure;
FIG. 3 is another flowchart illustrating a third-party SDK access control method according to an embodiment of the present disclosure; and
FIG. 4 is a flowchart illustrating a process of installing and using a target application according to an embodiment of the present disclosure.

### DETAIL DESCRIPTION OF EMBODIMENTS

Exemplary embodiments will be described more fully below with reference to the drawings, but the exemplary embodiments may be embodied in different forms and should not be interpreted as being limited to the embodiments described herein. The embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the terms "include" and/or "be made of" used herein indicate the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the related technology and the background of the present disclosure, and should not be interpreted in an idealized or overly formal sense unless expressly so defined herein.

In the related technology, a third-party SDK is integrated with a host application during a compilation period, and for a user and an operating system, the third-party SDK is part of the host application and forms a physical application together with the host application. The operating system allocates a sandbox for such application, the host application and the third-party SDK are run in the same sandbox, and the third-party SDK completely inherits access scope and access permissions of the host application to system resources and other application resources. In particular, the third-party SDK can access built-in resources of the host application and resources generated by the host application. Thus, if an installation package of the host application carries a malicious SDK, the malicious SDK is synchronously run while running the host application, which causes security risks.

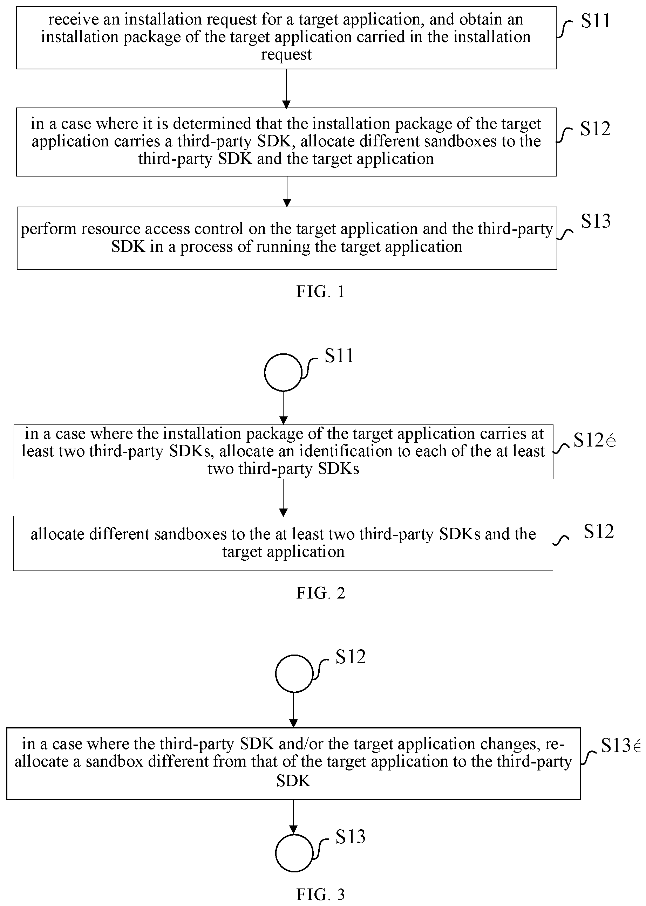

In order to solve the above problem, an embodiment of the present disclosure provides a third-party SDK access control method, and as shown in FIG. 1, the third-party SDK access control method includes the following operations S11 to S13.

At operation S11, an installation request for a target application is received, and an installation package of the target application carried in the installation request is obtained.

A source of the installation request includes, but is not limited to, a system and a user. At this operation, the installation request is analyzed to obtain information carried in the installation request and the installation package of the target application carried in the installation request.

At operation S12, in a case where it is determined that the installation package of the target application carries a third-party SDK, different sandboxes are allocated to the third-party SDK and the target application.

At this operation, whether the installation package of the target application carries the third-party SDK is determined based on the information obtained at operation S11, and if the installation package of the target application carries the third-party SDK, different sandboxes are respectively allocated to the target application and the third-party SDK, so as to enable the target application and the third-party SDK to be run in two independent sandboxes.

It should be noted that the target application is a host application of the third-party SDK if the installation package of the target application carries the third-party SDK.

At operation S13, resource access control is performed on the target application and the third-party SDK in a process of running the target application.

Operations S11 and S12 are the operations performed in an installation phase of the target application, and operation S13 is the operation performed in an operational phase of the target application.

The third-party SDK access control method provided in the embodiment of the present disclosure includes: receiving the installation request for the target application, obtaining the installation package of the target application carried in the installation request, and allocating the different sandboxes to the third-party SDK and the target application in a case where it is determined that the installation package of the target application carries the third-party SDK; and performing resource access control on the target application and the third-party SDK in the process of running the target application. According to the embodiment of the present disclosure, the third-party SDK with uncontrollable behaviors is placed in an independent sandbox at the operating system level, so that a harmful third-party SDK can be prevented from infringing on the system through the host application, and security of a mobile terminal can be improved at the system level.

In some embodiments, whether the installation package of the target application carries the third-party SDK is determined in a following way: obtaining information carried in the installation request; comparing the obtained information with a third-party SDK feature library or preset information; and determining that the installation package of the target application carries the third-party SDK in a case where comparison succeeds.

A source of the third-party SDK feature library includes, but is not limited to, real-time online collection, advanced online collection, and local pre-configuration.

In some embodiments, performing resource access control on the target application and the third-party SDK in the process of running the target application (i.e., operation S13) includes: performing different levels of resource access control on the target application and the third-party SDK in the process of running the target application. For example, higher-level read-write and execute permissions may be configured for the target application, and lower-level read-write and execute permissions may be configured for the third-party SDK. According to the embodiments of the present disclosure, different levels of resource access permissions are configured for the target application and the third-party SDK, so that system security can be improved, and users' privacy data can be protected.

In some embodiments, in a case where the installation package of the target application carries at least two third-party SDKs, allocating the different sandboxes to the third-party SDK and the target application (i.e., operation S12) includes one of the following cases.

Case 1: A sandbox different from that of the target application is respectively allocated to each of the third-party SDKs of the at least two third-party SDKs, that is, one sandbox is allocated to each of the third-party SDKs with the third-party SDK as the granularity, and the sandbox allocated to each of the third-party SDKs is different from the sandbox allocated to the target application.

Case 2: A same sandbox different from that of the target application is allocated to all the third-party SDKs, that is, one sandbox is allocated to all the third-party SDKs, and is different from the sandbox allocated to the target application.

Case 3: All the third-party SDKs are clustered to obtain at least two categories, and a sandbox different from that of the target application is allocated to each of the at least two categories, that is, the third-party SDKs are first classified, one sandbox is allocated to the third-party SDKs in the same category, and the sandboxes allocated to different categories of third-party SDKs vary and are different from the sandbox allocated to the target application.

In some embodiments, performing resource access control on the third-party SDK in the process of running the target application (i.e., operation S13) includes: in a case where the sandbox different from that of the target application is allocated to each of the at least two third-party SDKs, or in a case where the sandbox different from that of the target application is allocated to each of the at least two categories, performing different levels of resource access control on the third-party SDKs in the different sandboxes in the process of running the target application. That is, in a case where a plurality of third-party SDKs are provided and not all the third-party SDKs are allocated to the same sandbox, with the sandbox as the granularity, the third-party SDKs in the respective sandboxes are subjected to different levels of resource access control, and the third-party SDKs in a same sandbox are subjected to the same level of resource access control.

It should be noted that the access of a same target application or a same third-party SDK to different resources is differentiated into different levels of resource access control.

In some embodiments, as shown in FIG. 2, before allocating the different sandboxes to the third-party SDK and the target application (i.e., operation S12), the third-party SDK access control method may further include the following operation S12'.

At operation S12', in a case where the installation package of the target application carries at least two third-party SDKs, an identification is allocated to each of the at least two third-party SDKs.

The sandbox may be allocated to each of third-party SDKs based on the identification of the third-party SDK.

Accordingly, allocating the sandbox different from that of the target application to each of the at least two third-party SDKs includes: allocating the sandbox different from that of the target application to each of the third-party SDKs based on the identification of each of the third-party SDKs and an identification of the target application, that is, the identification of one third-party SDK corresponds to one sandbox.

Allocating the sandbox different from that of the target application to each of the at least two categories includes: allocating a same sandbox different from that of the target application to the third-party SDKs belonging to a same category based on the identification of each of the third-party SDKs and the identification of the target application, that is, the identifications of one or more third-party SDKs belonging to the same category correspond to one sandbox.

In some embodiments, allocating the identification to each of the at least two third-party SDKs (i.e., operation S12') includes: allocating, based on a name or an API name of each of the third-party SDKs, the identification to the third-party SDK.

In some embodiments, allocating, based on the name or the API name of each of the third-party SDKs, the identification to the third-party SDK includes one of: taking the name of each of the third-party SDKs as the identification of the third-party SDK; for each of the at least two third-party SDKs, encoding the name of the third-party SDK to obtain a first code, converting the first code into a second code, and taking the second code as the identification of the third-party SDK; taking the API name of each of the third-party SDKs as the identification of the third-party SDK; or, for each of the at least two third-party SDKs, encoding the API name of the third-party SDK to obtain a third code, converting the third code into a fourth code, and taking the fourth code as the identification of the third-party SDK.

In some embodiments, performing resource access control on the target application and the third-party SDK in the process of running the target application (i.e., operation S13) includes: respectively performing resource access control on at least one following file running in each sandbox: an Android Application Package (APK) file, a third-party SDK file, or other independently executable files than the APK file and the third-party SDK file.

The sandbox may contain the APK file or contain the APK file and the other independently executable files than the APK file. Alternatively, the sandbox may contain the SDK file or contain the SDK file and the other independently executable files than the SDK file.

In some embodiments, as shown in FIG. 3, after allocating the different sandboxes to the third-party SDK and the target application (i.e., operation S12) and before performing resource access control on the target application and the third-party SDK in the process of running the target application (i.e., operation S13), the third-party SDK access control method further includes the following operation S13'.

At operation S13', in a case where the third-party SDK and/or the target application changes, a sandbox different from that of the target application is re-allocated to the third-party SDK.

In some embodiments, a change of the third-party SDK includes, but is not limited to, version upgrading of the third-party SDK, a change of the name of the third-party SDK, an API change, a change of permissions of the third-party SDK (including expansion of scope of the permissions and reduction of the scope of the permissions), and a change of an identification policy for generating the third-party SDK. A change of the target application includes, but is not limited to, upgrading of the target application.

In the embodiments of the present disclosure, the sandbox is re-allocated to the third-party SDK in a case where the above conditions are met. It should be noted that the sandbox may not be re-allocated to the third-party SDK in a case where the above conditions are met, that is, the sandboxes originally allocated to the target application and the third-party SDK may be continuously used.

In some embodiments, resources accessed by the target application and the third-party SDK include at least one of: various types of built-in files of the system, which include, but are not limited to, physical files in a file system, data, and program resources; various types of files generated in a runtime phase of the system, which include, but are not limited to, caches and data generated in the runtime phase of the system; APK files, SDK files, and other independently executable files than the APK files and the SDK files; or various types of files generated by the APK files, the SDK files, and the other independently executable files than the APK files and the SDK files in the runtime phase.

In order to clearly illustrate the technical solutions of the embodiments of the present disclosure, the technical solutions of the embodiments of the present disclosure are illustrated below by a specific example.

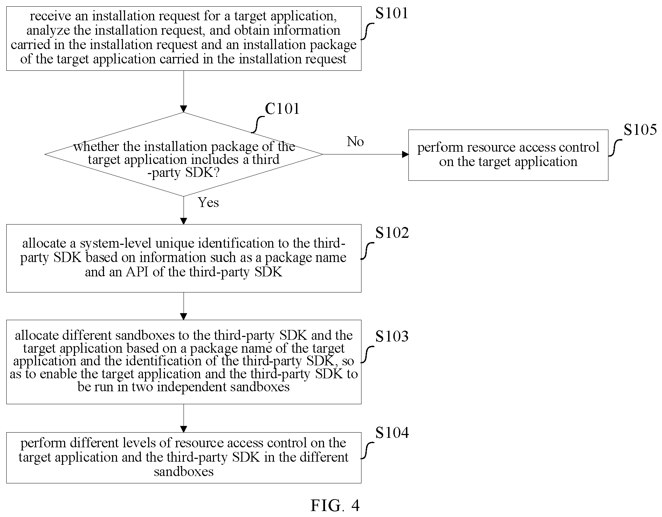

As shown in FIG. 4, a process of installing and using the target application includes the following operations S101 to S104.

At operation S101, an installation request for a target application is received and analyzed, and information carried in the installation request and an installation package of the target application carried in the installation request are obtained.

At operation C101, whether the installation package of the target application includes a third-party SDK is determined, and if the installation package of the target application includes the third-party SDK, operation S102 is performed; and if the installation package of the target application does not include the third-party SDK, operation S105 is performed.

At this operation, based on the information obtained by the analysis at operation S101, the comparison with the third-party SDK feature library is adopted to determine whether the installation package of the target application includes the third-party SDK.

At operation S102, a system-level unique identification is allocated to the third-party SDK based on information such as a package name and an API of the third-party SDK.

At operation S103, different sandboxes are allocated to the third-party SDK and the target application based on a package name of the target application and the identification of the third-party SDK, so as to enable the target application and the third-party SDK to be run in two independent sandboxes.

At operation S104, different levels of resource access control are performed on the target application and the third-party SDK in the different sandboxes.

At operation S105, resource access control is performed on the target application.

In view of the security issue of the third-party SDK and in consideration of the fact that the third-party SDK is invisible to the application developers, the embodiments of the present disclosure prevents a host application from be utilized when a security issue occurs in a case where an SDK with unexpected behaviors, requests, and responses is packaged in the host application, and prevents a malicious third-party SDK from performing dangerous operations such as dynamic downloading. Further, based on the existing application access control, the embodiments of the present disclosure place a third-party SDK with uncontrollable behaviors in an independent sandbox at the operating system level, so that a harmful third-party SDK can be prevented from infringing on the operating system and the user through the host application, security protection for a mobile terminal can be improved at the system level, and users' security experience can be improved.

An embodiment of the present disclosure further provides a computer device, including: one or more processors and a memory; and the memory has stored thereon one or more computer programs which, when executed by the one or more processors, cause the one or more processors to implement the third-party SDK access control method provided in the above embodiments.

An embodiment of the present disclosure further provides a computer readable medium having stored thereon a computer program which, when executed by a processor, causes the processor to implement the third-party SDK access control method provided in the above embodiments.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a Central Processing Unit (CPU), a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A third-party Software Development Kit, called SDK, access control method, comprising:
receiving an installation request for a target application, and obtaining an installation package of the target application carried in the installation request;
in response to determining that the installation package of the target application carries a third-party SDK, allocating different sandboxes to the third-party SDK and the target application; and
performing resource access control on the target application and the third-party SDK in a process of running the target application.

2. The method of claim 1, wherein whether the installation package of the target application carries the third-party SDK is determined in a following way:
obtaining information carried in the installation request;
comparing the information with a third-party SDK feature library or preset information; and
determining that the installation package of the target application carries the third-party SDK in a case where comparison succeeds.

3. The method of claim 1, wherein performing resource access control on the target application and the third-party SDK in the process of running the target application comprises:
performing different levels of resource access control on the target application and the third-party SDK in the process of running the target application.

4. The method of claim 3, wherein the installation package of the target application carries at least two third-party SDKs, and allocating the different sandboxes to the third-party SDK and the target application comprises one of:
allocating a sandbox different from a sandbox of the target application to each of the at least two third-party SDKs;
allocating a same sandbox different from the sandbox of the target application to all the at least two third-party SDKs; and
clustering all the at least two third-party SDKs to obtain at least two categories, and allocating a sandbox different from the sandbox of the target application to each of the at least two categories.

5. The method of claim 4, wherein performing resource access control on the third-party SDK in the process of running the target application comprises:
in a case where the sandbox different from the sandbox of the target application is allocated to each of the at least two third-party SDKs, or in a case where the sandbox different from the sandbox of the target application is allocated to each of the at least two categories, performing different levels of resource access control on the at least two third-party SDKs in the different sandboxes in the process of running the target application.

6. The method of claim 4, wherein before allocating the different sandboxes to the third-party SDK and the target application, the method further comprises:
in a case where the installation package of the target application carries the at least two third-party SDKs, allocating an identification to each of the at least two third-party SDKs;
allocating the sandbox different from the sandbox of the target application to each of the at least two third-party SDKs comprises:
allocating the sandbox different from the sandbox of the target application to each of the third-party SDKs based on the identification of each of the third-party SDKs and an identification of the target application; and
allocating the sandbox different from the sandbox of the target application to each of the at least two categories comprises:
allocating a same sandbox different from the sandbox of the target application to the third-party SDKs belonging to a same category based on the identification of each of the third-party SDKs and the identification of the target application.

7. The method of claim 6, wherein allocating the identification to each of the at least two third-party SDKs comprises:
allocating, based on a name or an Application Programming Interface, called API, name of each of the third-party SDKs, the identification to the third-party SDK.

8. The method of claim 7, wherein allocating, based on the name or the API name of each of the third-party SDKs, the identification to the third-party SDK comprises one of:
taking the name of each of the third-party SDKs as the identification of the third-party SDK;
for each of the at least two third-party SDKs, encoding the name of the third-party SDK to obtain a first code, converting the first code into a second code, and taking the second code as the identification of the third-party SDK;
taking the API name of each of the third-party SDKs as the identification of the third-party SDK; or
for each of the at least two third-party SDKs, encoding the API name of the third-party SDK to obtain a third code, converting the third code into a fourth code, and taking the fourth code as the identification of the third-party SDK.

9. The method of claim 1, wherein performing resource access control on the target application and the third-party SDK in the process of running the target application comprises:
performing resource access control on at least one following file running in each sandbox:
an Android Application Package, called APK, file, a third-party SDK file, or other independently executable files than the APK file and the third-party SDK file.

10. The method of any one of claims 1 to 9, wherein after allocating the different sandboxes to the third-party SDK and the target application and before performing resource access control on the target application and the third-party SDK in the process of running the target application, the method further comprises:
in a case where the third-party SDK and/or the target application changes, re-allocating a sandbox different from a sandbox of the target application to the third-party SDK.

11. A computer device, comprising:
one or more processors; and
a memory having one or more computer programs stored thereon;
the one or more computer programs, when executed by the one or more processors, cause the one or more processors to implement the third-party SDK access control method of any one of claims 1 to 10.

12. A computer readable medium having a computer program stored thereon, wherein the program, when executed by a processor, causes the processor to implement the third-party SDK access control method of any one of claims 1 to 10.
